# EUROPÄISCHE PATENTANMELDUNG

(11) **EP 2 626 168 A2**
(43) Veröffentlichungstag der Anmeldung: **14.08.2013**
(21) Anmeldenummer: 13000530.9
(22) Anmeldetag: 01.02.2013
(51) Int. Cl.: B23P 11/00

(54) **Einpressvorrichtung zum Einpressen einer Lagerhülse in eine Lageröffnung eines Motorbauteils**

(30) Priorität: 08.02.2012 DE 102012002340
(71) Anmelder: Alfing Kessler Sondermaschinen GmbH, 73433 Aalen (DE)
(72) Erfinder: Straub, Ulrich, 73079 Süßen (DE); Müllner, Ralf, 73760 Ostfildern (DE)
(74) Vertreter: Bregenzer, Michael

(57) **Zusammenfassung**

Die Erfindung betrifft eine Einpressvorrichtung (10; 110) zum Einpressen einer Lagerhülse (90) in eine Lageröffnung (82) eines Motorbauteils (M), insbesondere in ein Lagerauge eines Pleuels (80), mit einem Einpressdorn (20; 120) zum Halten und Einpressen der Lagerhülse (90) in die Lageröffnung (82), wobei eine Außenumfangsfläche (25) des Einpressdorns (20; 120) zur Anlage an einer Innenumfangsfläche der Lagerhülse (90) vorgesehen ist, und ein Verfahren zur Nutzung einer derartigen Einpressvorrichtung (10; 110). Bei der Einpressvorrichtung (10; 110) ist vorgesehen, dass sie verdrängermittel (30; 130) aufweist und mindestens ein einen Teil der Außenumfangsfläche (25) aufweisender Umfangswandabschnitt (36, 37) des Einpressdorns (20; 120) durch die Verdrängermittel (30; 130) im Sinne eines Aufweitens eines Außenumfangs der Außenumfangsfläche (25) des Einpressdorns (20; 120) und somit eines Außenumfangs (94) der Lagerhülse (90) beaufschlagbar ist, um die in die Lageröffnung (82) eingebrachte Lagerhülse (90) aufzuweiten und an eine Innenfläche (87) der Lageröffnung anzupressen.

## Beschreibung

Die Erfindung betrifft eine Einpressvorrichtung zum Einpressen einer Lagerhülse in eine Lageröffnung eines Motorbauteils, insbesondere in ein Lagerauge eines Pleuels, mit einem Einpressdorn zum Halten und Einpressen der Lagerhülse in die Lageröffnung, wobei eine Außenumfangsfläche des Einpressdorns zur Anlage an einer Innenumfangsfläche der Lagerhülse vorgesehen ist, und ein Verfahren zur Nutzung einer derartigen Einpressvorrichtung.

Die Lagerhülse wird in das in der Regel vorgearbeitete Lagerauge ein gepresst. Dazu hat der seitens der Anmelderin verwendete Einpressdorn eine Stützschulter, die an einer Stirnseite der Lagerhülse anliegt, so dass diese mit entsprechender Kraft in Einpressrichtung bzw. Einschubrichtung in die Lageröffnung hinein gepresst werden kann. Problematisch sind jedoch Lagerhülsen, deren Stirnseite nicht quer zur Einpressrichtung rechtwinkelig verläuft, sondern schräg oder, was noch viel schwieriger zu handhaben ist, einen bogenförmigen oder kurvenförmigen Verlauf hat. Solche Lagerhülsen sind beispielsweise bei sogenannten Korbhenkel-Pleueln üblich, die im Bereich ihres Lagerauges seitlich gesehen einen Schrägverlauf haben.

Es ist daher die Aufgabe der vorliegenden Erfindung, eine verbesserte Einpressvorrichtung zum Einpressen von Lagerhülsen in Lageröffnungen eines Motorbauteils, insbesondere in ein Lagerauge eines Pleuels, sowie ein entsprechendes Verfahren bereitzustellen.

Zur Lösung der Aufgabe bei einer Einpressvorrichtung der eingangs genannten Art vorgesehen, dass sie Verdrängermittel aufweist und mindestens ein einen Teil der Außenumfangsfläche aufweisender Umfangswandabschnitt des Einpressdorns durch die Verdrängermittel im Sinne eines Aufweitens eines Außenumfangs der Außenumfangsfläche des Einpressdorns und somit eines Außenumfangs der Lagerhülse beaufschlagbar ist, um die in die Lageröffnung eingebrachte Lagerhülse aufzuweiten und an eine Innenfläche der Lageröffnung anzupressen.

Das erfindungsgemäße Verfahren zum Einpressen einer Lagerhülse in eine Lageröffnung eines Motorbauteils, insbesondere in ein Lagerauge eines Pleuels, mit einer einen Einpressdorn zum Halten und Einpressen der Lagerhülse in die Lageröffnung aufweisenden Einpressvorrichtung, wobei eine Außenumfangsfläche des Einpressdorns zur Anlage an einer Innenumfangsfläche der Lagerhülse vorgesehen ist, hat die Schritte:
- Anordnen der Lagerhülse mit ihrer Innenumfangsfläche an der Außenumfangsfläche des Einpressdorns,
- Einführen der Lagerhülse in die Lageröffnung des Motorbauteils,
- Betätigen eines Verdrängermittels zur Beaufschlagung mindestens eines Umfangswandabschnitts, der einen Teil der Außenumfangsfläche aufweist, im Sinne eines Aufweitens eines Außenumfangs der Außenumfangsfläche des Einpressdorns und somit eines Außenumfangs der Lagerhülse, um die in die Lageröffnung eingebrachte Lagerhülse aufzuweiten und an eine Innenfläche der Lageröffnung anzupressen.

Der Innenumfang der Lagerhülse ist als eine Lagerfläche ausgestaltet, beispielsweise für eine Kurbelwelle und/oder einen Kolbenbolzen. Die Außenumfangsfläche des Einpressdorns, die erfindungsgemäß aufgeweitet werden kann, ist vorteilhaft an dessen vorderem, freien Ende, insbesondere seinem Spitzenbereich, angeordnet. Verständlich ist es denkbar, eine derartig aufweitbare Umfangswand auch beabstandet zum freien Ende vorzusehen.

Selbstverständlich ist es möglich, mit der Einpressvorrichtung nicht nur Pleuel, sondern auch andere Motorbauteile, beispielsweise Motorblöcke, mit einer oder mehreren Lagerhülsen zu versehen.

Es ist ein Grundgedanke der vorliegenden Erfindung, dass die Lagerhülse nicht oder mit allenfalls geringer axialer Kraftbeanspruchung in die Lageröffnung hinein gebracht und erst dort nach radial außen gepresst wird, so dass sie formschlüssig und/oder kraftschlüssig am Innenumfang der Lageröffnung anliegt.

Die Lagerhülse kann mit geringer Kraft, vorzugsweise sogar ohne Berührung mit der Lageröffnung, in die Lageröffnung eingebracht werden und wird dann erst aufgeweitet. Dadurch wirken keine Axialkräfte auf die Lagerhülse. Die Lagerhülse kann nicht ausgeschoben werden und/oder exakt bleibend positioniert werden.

Die Lagerhülse wird also vor Ort, nämlich in der Lageröffnung des Motorbauteils, aufgeweitet, so dass sie sich optimal den örtlichen Gegebenheiten anpasst. Dies hat auch den Vorteil, dass eventuelle Unebenheiten am Innenumfang der Lageröffnung bzw. am Außenumfang der Lagerhülse den Halt der Lagerhülse in der Lageröffnung sogar noch verbessern, jedenfalls nicht stören. Im Gegensatz zu einem axialen Einpressen, wie es bislang üblich war, stören solche gegebenenfalls vorhandenen Erhöhungen oder Vertiefungen nicht.

Erfindungsgemäß ist es möglich, an unterschiedlichen Stellen unterschiedliche Druckkräfte auf die Umfangswand auszuüben, so dass beispielsweise über unterschiedliche Winkelsegmente gesteuert oder definiert unterschiedliche Druckkräfte zum Einpressen der Lagerhülse an die Lageröffnung des Motorbauteils.

Die Außenumfangsfläche kann eine geschlossene Außenumfangsfläche sein, insbesondere mit einem im Querschnitt kreisrunden Umfang sein. Es ist aber auch möglich, dass die Umfangswand in Segmente oder Umfangswandabschnitte gegliedert ist, die individuell oder als Ganzes im Sinne des Aufweitens beaufschlagbar sind. Es ist ferner möglich, dass die Außenumfangsfläche einen oder mehrere Dehnungsschlitze oder Dehnungsnuten aufweist, so dass die Umfangswandabschnitte oder Teile davon nachgiebig sind. Es können auch Umfangswandabschnitte durch Dehnungsschlitze voneinander getrennt sein.

Das oder die Verdrängermittel können verschiedenartig ausgestaltet sein, beispielsweise auf einem fluidischen Prinzip beruhen. Bei dieser Variante ist es noch nicht einmal notwendig, dass die Umfangswandschlitze aufweist oder sonstige nachgiebige Trennstellen. Vielmehr kann die Umfangswand als Ganzes etwas aufgeweitet werden, so dass sie die Lagerhülse nach außen an den Innenumfang der Lageröffnung des Motorbauteils hin beaufschlagt. Beispielsweise umfasst das Verdrängermittel eine oder mehrere Fluidkammer, die hinter einem Umfangswandabschnitt oder dem Umfangswandabschnitt angeordnet sind. Bei einer Druckbeaufschlagung mit einem Fluid, beispielsweise Hydrauliköl, gibt die Umfangswand nach, d.h. sie wird von der Fluidkammer aus betätigt und drückt nach außen auf den Innenumfang der Lagerhülse, so dass diese dadurch in die Lageröffnung hinein gepresst wird.

Das Verdrängermittel kann aber auch auf einem mechanischen Prinzip beruhen und beispielsweise ein Keilgetriebe zur Beaufschlagung des mindestens einen Umfangswandabschnitts umfassen. Das Keilgetriebe umfasst beispielsweise einen oder mehrere Keilkörper, die an der von Außenumfangsfläche abgewandten Rückseite des Umfangswandabschnitts angeordnet sind. Wenn der Keilkörper längs betätigt wird, z.B. geschoben oder gezogen, drückt er aufgrund einer Schrägflächenanordnung am Keilkörper und/oder der Umfangswand auf die Rückseite der Umfangswand, so dass diese nach außen im Sinne eines Aufweitens der Lagerhülse betätigt wird.

Das Keilgetriebe kann auch mindestens eine Kugel als Keilkörper oder Betätigungskörper umfassen.

Das Keilgetriebe kann selbstverständlich auch ein Schraubkörper umfassen, dessen Betätigung bzw. Bewegung der mindestens eine Umfangswandabschnitt betätigbar ist. Beispielsweise kann der Schraubkörper einen konischen Grundkörper haben, an dessen Außenumfang die Schraubenwindungen angeordnet sind.

Bevorzugt ist es, wenn dem Einpressdorn ein Stützkörper gegenüberliegt, der zum Abstützen während des Einpressens der Lagerhülse dient. Der Stützkörper kann in der Art eines Dorns oder einer Stange ausgestaltet sein. Es ist aber auch möglich, dass der Stützkörper beispielsweise als eine Art Klotz ausgestaltet ist.

Der Stützkörper und/oder der Einpressdorn sind zweckmäßigerweise relativ zu der Lageröffnung bzw. zu dem Motorbauteil beweglich gelagert. Somit können beide Komponenten in die Lageröffnung hinein bzw. aus dieser heraus bewegt werden. Es ist selbstverständlich auch möglich, dass das Motorbauteil, d.h. das Werkstück, zum Einpressdorn hin bewegt wird. Weiterhin ist es möglich, dass sowohl das Motorbauteil als auch der Stützkörper und oder der Einpressdorn beweglich gelagert sind.

Der Stützkörper hat zweckmäßigerweise eine Aufnahme für einen Vorderabschnitt des Einpressdorns. Somit kann beispielsweise eine Stirnseite des Einpressdorns in die Aufnahme eingreifen, während die Lagerhülse aufgeweitet wird.

Die Einpressvorrichtung weist zweckmäßigerweise mindestens eine Stützanschlagfläche für eine Stirnseite der Lagerhülse auf. Bevorzugt ist eine kontinuierliche, durchgehende Stützanschlagfläche, an der die Stirnseiten möglichst flächig anliegen kann. Dadurch ist die Lagerhülse gut abgestützt, wenn sie erfindungsgemäß aufgeweitet wird.

Die mindestens eine Stützanschlagfläche oder auch eine Reihe nebeneinander angeordneter Stützanschlagflächen (mindestens 2 Stützanschlagflächen) haben zweckmäßigerweise einen schrägen und nicht rechtwinkligen und/oder einen gekrümmten Verlauf bezüglich einer Achslinie, bei der es sich beispielsweise um die Einführachse des Einpressdorns in die Lageröffnung des Motorbauteils oder auch um eine Längserstreckungsachse des Einpressdorns handeln kann. Somit können also die eingangs erwähnten Lagerhülse, die keine geradlinige oder flache Stirnseite hat, gut abgestützt werden.

Die mindestens eine Stützanschlagfläche ist zweckmäßigerweise an einer Anschlagschulter oder an einem Anschlagvorsprung einer Komponente der Einpressvorrichtung, beispielsweise des Einpressdorns oder des Stützkörpers oder beiden der vorgenannten, angeordnet. Somit ist es beispielsweise möglich, die Lagerhülse von beiden Seiten her zu stützen.

Weiterhin ist es vorteilhaft, wenn die Einpressvorrichtung auch eine Werkstückhalterung zum Halten des Werkstücks aufweist. Bei der Werkstückhalterung kann es sich beispielsweise um eine Tragplatte, eine Palette oder dergleichen handeln.

Die Werkstückhalterung hat zweckmäßigerweise eine Durchtrittsöffnung, durch die der Einpressdorn oder auch der Stützkörper zum Einpressen der Lagerhülse hindurchtreten können.

Die erfindungsgemäße Einpressvorrichtung kann einen Bestandteil einer allein zu betreibenden Einpress-Maschine bilden oder eine solche Maschine darstellen.

Die erfindungsgemäße Einpressvorrichtung bildet zweckmäßigerweise einen Bestandteil eines Bearbeitungszentrums für Motorbauteile, das auch andere Bearbeitungsschritte leisten kann, beispielsweise Fräsen, Drehen, Bohren oder Kerben. Besonders bevorzugt ist es, wenn das Bearbeitungszentrum als Bearbeitungseinrichtung für mindestens einen weiteren Bearbeitungsschritt eine Kerbeinrichtung zum Einbringen von Laserkerben und/oder eine Crackeinrichtung zum Cracken eines Teils des Motorbauteils oder dergleichen aufweist. Somit kann beispielsweise das Pleuel insgesamt von dem Bearbeitungszentrum insgesamt bearbeitet werden, indem beispielsweise zunächst die Lageröffnungen gebohrt und anschließend Teile des Motorbauteils durch Laserkerben und Cracken entfernt werden. Selbstverständlich ist es vorteilhaft, wenn dann auch eine Schraubstation vorhanden ist, um die abgesprengten Teile des Motorbauteils wieder anzufügen.

Nachfolgend wird ein Ausführungsbeispiel der Erfindung anhand der Zeichnung erläutert. Es zeigen:
- Figur 1: eine Schrägansicht von oben auf eine erfindungsgemäße Einpressvorrichtung,
- Figur 2: eine Werkstückhalterung der Einpressvorrichtung gemäß Figur 1, auf die ein Pleuel aufgelegt ist,
- Figur 3: eine Ausschnittsvergrößerung etwa entsprechend einem Ausschnitt A in Figur 1,
- Figur 4: eine Querschnittsansicht der Einpressvorrichtung gemäß Figur 1 etwa entlang einer Schnittlinie B-B mit hydraulischen Verdrängermitteln,
- Figur 5: eine weitere Einpressvorrichtung gemäß der Erfindung etwa entsprechend der Ansicht gemäß Figur 4, jedoch mit Keilkörpern bzw. einem Keilgetriebe, und
- Figur 6: eine perspektivische Schrägansicht einer Lagerhülse für das in Figur 2 dargestellte Pleuel.

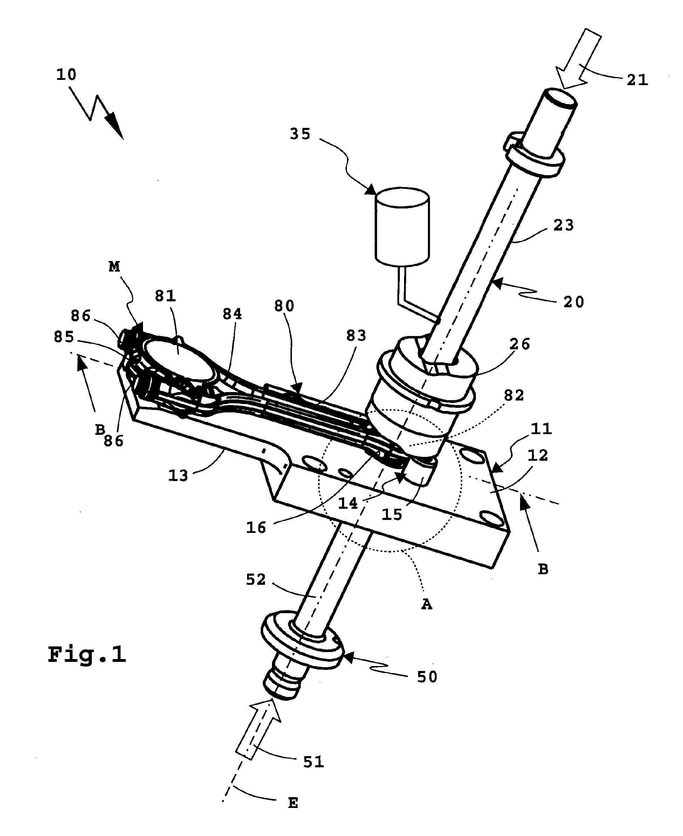

Einpressvorrichtungen 10 und 110 gemäß Figuren 1, 4 sowie 5 dienen zum Einpressen von Lagerhülse 90 in Lageröffnungen 82 von Pleuelstangen 80. Eine jeweilige Pleuelstange 80 hat ein großes Auge 81 sowie ein kleines Auge, das die Lageröffnung 82 bildet.

Die Einpressvorrichtungen 10 und 110 bilden zweckmäßigerweise Bestandteile von Bearbeitungszentren, bei denen an der Pleuelstange 80 ersichtliche vorherige Schritte erfolgt sind, so dass beispielsweise die beiden Augen 81 und 82 gebohrt werden. Weiterhin ist das Bearbeitungszentrum auch in der Lage, beispielsweise einen Deckel 85 von einem Pleuelfuß 84 in Verlängerung eines Schafts 83 der Pleuelstange 80 abzusprengen, indem an unterschiedlichen Bearbeitungsstationen des Bearbeitungszentrums beispielsweise zunächst zwischen dem Deckel 85 und dem Pleuelfuß 84 eine Laserkerbe eingebracht wird und anschließend der Deckel 85 weg gecrackt wird. Schließlich ist eine weitere Bearbeitungsstation vorgesehen, bei der Deckel 85 mittels Schrauben 86 wieder am Pleuelfuß 84 befestigt wird.

Ein abschließender Bearbeitungsschritt findet bei den Einpressvorrichtungen 10 und 110 statt, das später noch detailliert beschriebene erfindungsgemäße Einpressen der Lagerhülse 90 in die das kleine Auge bildende Lageröffnung 82.

Die Einpressvorrichtungen 10 und 110 können auch Bestandteile einer separaten Maschine sein oder eine solche Maschine bilden, die nur den Schritt des Einpressens der Lagerhülse 10 durchführt. Eine solche Maschine kann, muss aber nicht, beispielsweise hinter einem Bearbeitungszentrum angeordnet sein.

Die Pleuelstange 80 liegt zweckmäßigerweise auf einer palettenartigen Werkstückhalterung 11 auf, wenn sie von den Einpressvorrichtungen 10 oder 110 weiter bearbeitet wird. Die Pleuelstange 80 liegt beispielsweise auf einer Oberseite 12 der Werkstückhalterung 11 auf. Die Werkstückhalterung 11 umfasst beispielsweise eine Stützplatte 14, an der eines oder mehrere Anlageelemente 15 angeordnet sind, um die Pleuelstange 80 zu halten. Beispielsweise liegt eine Umfangswand 88, die die Lageröffnung 82 begrenzt, außenseitig an den beiden stützenartigen Anlageelementen 15 an. Ein Innenumfang der Umfangswand 88 weist eine Innenfläche 87 auf.

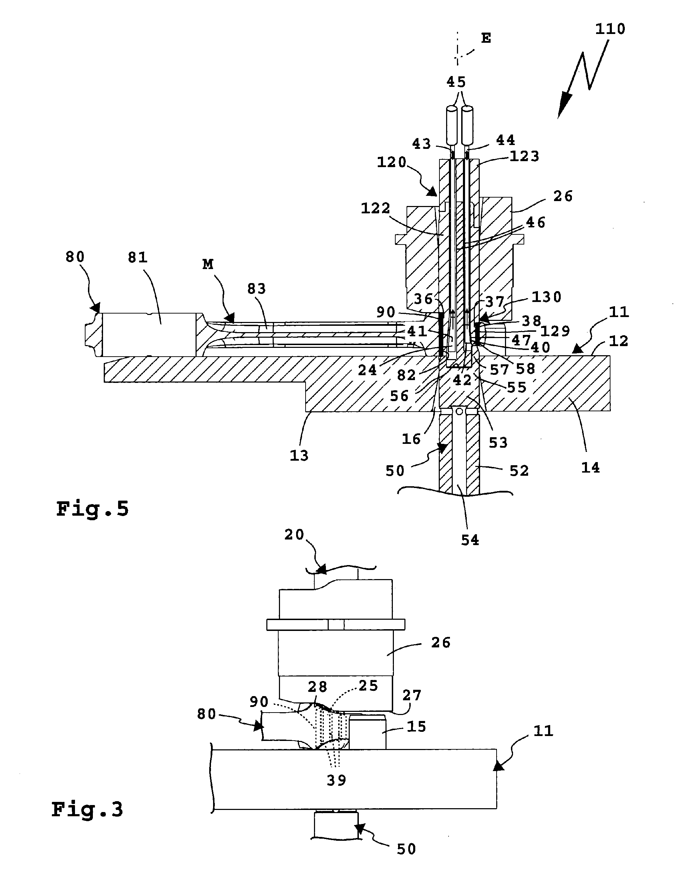

Die Lagerhülse 90 umfasst einen Ringkörper 91, dessen obere Stirnseite 92 und untere Stirnseite 93 einen Schrägverlauf bezüglich einer Längsachse 96 der Lagerhülse 90 haben. Der Verlauf der Stirnseiten 92 und 93 entspricht der in Figur 3 sichtbaren Höhe der Pleuelstange 80 im Bereich der Lageröffnung 82, so dass die in die Lageröffnung 82 eingebrachte Lagerhülse 90 nach oben und unten nicht oder nur unwesentlich vor die Pleuelstange 80 bzw. deren Grundkörper vorsteht. Allerdings sind derartige schräg bzw. kurvig verlaufende Stirnseiten 92 und 93 sehr problematisch in Bezug auf das Einpressen in die Lageröffnung.

Der Innenumfang 95 der Lagerhülse 90 dient später, wenn die Pleuelstange 80 in Betrieb ist, als Lagerfläche. Der Außenumfang 94 ist dazu vorgesehen, fest an der Innenfläche 87 des kleinen Auges bzw. der Lageröffnung 82 anzuliegen.

Die Einpressvorrichtungen 10 und 110 haben teilweise gleiche oder gleichartige Komponenten, die nachfolgend mit denselben Bezugsziffern versehen sind, die jedoch teilweise bei der Einpressvorrichtung 110 um 100 zur Verdeutlichung von Unterschieden erhöht sind.

Die Einpressvorrichtungen 10, 110 weisen Einpressdorne 20, 120 sowie diesen gegenüberliegende Stützkörper 50 auf. Die Stützkörper 50 und die Einpressdorne 20, 120 sind zweckmäßigerweise linear beweglich und zwar entlang einer Einführachse E, zu der Lageröffnung 82 hin bzw. von der Lageröffnung 82 weg. Hierzu sind beispielsweise Antriebe 21, 51 vorgesehen, die in Figur 1 durch entsprechende Pfeile dargestellt sind. Bei den Antrieben 21, 51 handelt es sich beispielsweise um pneumatische, hydraulische und/oder elektrische Antriebe.

Der Stützkörper 50 umfasst beispielsweise eine Stange 52, die durch den Antrieb 51 axial entlang der Einführachse E verstellbar ist. Am vorderen, freien Ende des Stützkörpers 50 ist ein Kopfstück 53 angeordnet. Es wäre denkbar, dass das Kopfstück 53 relativ zur Stange 52 beweglich ist, so dass es beispielsweise durch Druckbeaufschlagung mittels eines Fluids, das einen Kanal 54 im Innern der Stange 52 durchströmt, von der Stange 52 weg in Richtung des Einpressdorns 20 oder 120 verstellbar ist. Vorliegend ist jedoch das Kopfstück 53 fest an der Stange 52 angeordnet.

Mittels des Antriebs 51 kann der Stützkörper 50 von einer Unterseite 13 der Stützplatte 14 her in eine Durchtrittsöffnung 16 hinein bewegt werden, die sich unterhalb der Lageröffnung 82 der an der Werkstückhalterung 11 gehaltenen Pleuelstange 80 befindet.

Die Einpressdorne 20, 120 sind stangenartig aufgebaut und umfassen beispielsweise eine 1. Stangenkomponente 22, 122, die mit einer 2. Stangenkomponente 23, 123 verbunden ist. Selbstverständlich könnte auch eine durchgehende Stange vorhanden sein.

Die Stangenkomponente 22, 122 weist an ihrem vorderen, freien Ende 24 eine Außenumfangsfläche 25 auf, die zur Anlage am Innenumfang 95 der Lagerhülse 90, also auch zum Halten der Lagerhülse 90, vorgesehen ist.

Die Stangenkomponenten 22, 122 bzw. 23, 123 durchdringen einen Anschlagkörper 26 derart, dass die Stangenkomponenten 22, 122 mit ihren freien Enden 24 vor eine Stirnseite 27 des Anschlagkörpers 26 vorstehen. Die Stirnseite 27 bildet eine Stützanschlagfläche 28 für die obere Stirnseite 92 der Lagerhülse 90. Selbstverständlich wäre es denkbar, anstelle des Anschlagkörpers 26 auch einen festen Anschlag oder mehrere feste Anschläge neben den Außenumfangsflächen 25 der Einpressdorne 20, 120 vorzusehen, an denen die Lagerhülse 90 abstützbar ist.

Der Stützkörper 50 weist an seinem vorderen, freien Ende 55 eine Aufnahme 56 auf, in die die freien Enden 24 der Einpressdorne 20, 120 eintauchen können. Vorzugsweise ist ein formschlüssiger Halt vorgesehen, so dass die Einpressdorn 20, 120 vom Stützkörper 50 nicht nur abgestützt, sondern auch ortsfest quer zur Einführachse E gehalten werden. Dadurch ist eine besonders gute Positionierung der Lagerhülse 90 in der Lageröffnung 82 möglich.

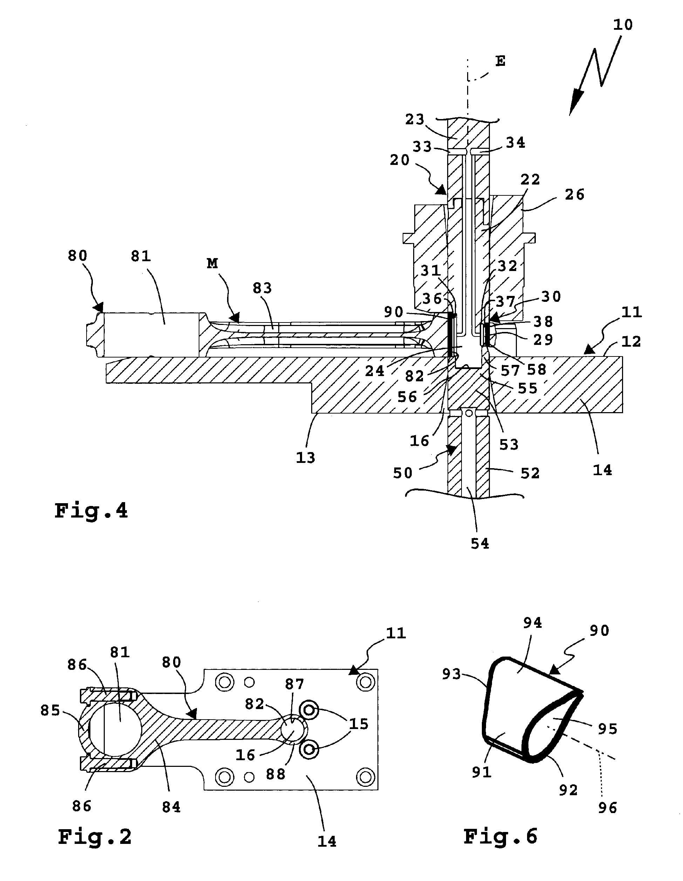

Die Lagerhülse 90 stützt sich mit Ihrer unteren Stirnseite 93 am Stützkörper 50 ab. Die Aufnahme 56 wird von einer Umfangswand 57 begrenzt, deren freie Stirnseite eine Stützanschlagfläche 58 bildet. Insbesondere in Figur 3 sowie den beiden Querschnittsansichten gemäß Figuren 4 und 5 erkennt man deutlich, dass die Stützanschlagflächen 28, 58 einen gekrümmten Verlauf haben entsprechend den gekrümmten Verläufen der Stirnseiten 92 und 93. Jedenfalls sind die Stirnseiten 92 und 93 und dementsprechend die Stützanschlagflächen 28 und 58 nicht rechtwinkelig quer zur Einführachse E. Dennoch gelingt das Einpressen der Lagerhülse 90 in die Lageröffnung 82 optimal.

Dazu sind hinter einer die Außenumfangsfläche 25 des Einpressdorns 20, 120 begrenzenden Umfangswand 29, 129 Verdrängermittel 30, 130 angeordnet, die jeweils die Umfangswand 29, 129 nach radial außen, d.h. in Richtung der Innenfläche 87 der Lageröffnungen 82 bzw. dem Innenumfang 95 der Lagerhülse 90 beaufschlagen, so dass die Umfangswand 29, 129 aufgeweitet und damit die Lagerhülse 90 bzw. deren Ringkörper 91 in die Lageröffnung 82 eingepresst wird.

Bei der Einpressvorrichtung 10 ist ein fluidisches, insbesondere hydraulisches, Konzept realisiert. Hinter der Umfangswand 29 befinden sich Fluidkammern 31, 32, die über in den Stangenkomponenten 22 und 23 verlaufende Fluidkanäle 33 und 34 mit einem Fluid, beispielsweise Hydrauliköl, beaufschlagbar sind. In Figur 1 ist exemplarisch ein Druckspeicher 35 eingezeichnet, aus dem das Hydrauliköl bzw. Fluid aus fließen und zum Beispiel in den Fluidkanal 33 einströmen kann. Der Druckspeicher 35 kann auch den Fluidkanal 34 mit dem Fluid versorgen, so dass in beiden Fluidkanälen 33 und 34 derselbe Druck vorherrscht. Es ist aber auch möglich, dass jeder Fluidkanal 33 und 34 und somit jede Fluidkammer 31 und 32 mit einem individuellen Druck beaufschlagbar ist, so dass die nach radial außen auf die Umfangswand 29 wirkende Kraft unterschiedlich einstellbar ist.

Die Umfangswand 29 ist eine durchgängige Umfangswand, das heißt sie bildet im Prinzip einen einzigen Umfangswandabschnitt. Man könnte aber auch sagen, dass die Umfangswand 29 miteinander einstückige Umfangswandabschnitte 36 und 37 umfasst. Der Umfangswandabschnitt 36 ist der Fluidkammer 31 zugeordnet, während der Umfangswandabschnitt 37 bei der Fluidkammer 32 ist.

Allein die Druckbeaufschlagung durch das Fluid reicht, um die Umfangswand 29 derart aufzuweiten, dass sie die Lagerhülse 90 in der Lageröffnung 82 verpresst. Zuvor, das heißt während die auf den Einpressdorn 20, 120 gesteckte Lagerhülse 90 in die Lageröffnung 82 eingebracht wird, indem der Einpressdorn 20 entlang der Einführachse E in Richtung der Lageröffnung 82 verfahren wird, hat die Lagerhülse 90 einen derartig "kleinen" Außenumfang 94, dass sie berührungslos oder mit geringerem Kontakt mit der Innenfläche 87 in die Lageröffnung 82 eingeschoben werden kann.

Die Verdrängermittel 130 umfassen ein Keilgetriebe 40, mit dem Umfangswandabschnitte 36, 37 nach außen im Sinne eines Aufweitens eines Außenumfangs 38 betätigbar sind. Beispielsweise sind hinter den Umfangswandabschnitten 36, 37 Keilkörper 41 und 42 angeordnet, die mittels Zugorganen 43 und 44 betätigbar sind, wobei alternativ auch Druckorgane denkbar sind. Ferner könnten die Keilkörper 41 und 42 auch durch einen oder mehrere Spindelantriebe angetrieben werden, z.B. durch eine nicht dargestellte Spindel, die mit nicht dargestellten Gewinden an den einander zugewandten Innenseiten der Keilkörper 41 und 42 kämmt. Die lineare Beweglichkeit Zugorgane 43 und 44 ist durch Pfeile angedeutet. Beispielsweise sind Zugantriebe 45 mit den Zugorganen 43 und 44 gekoppelt, zum Beispiel elektrische Antriebe oder hydraulische Antriebe. Die Zugorgane 43 und 44 sind durch Kanäle 46 geführt, die am oberen, freien Ende der Stangenkomponente 123 ausmünden. Die Darstellung ist schematisch zu verstehen.

Die Keilkörper 41 und 42 haben beispielsweise an ihren den Umfangswandabschnitten 36 und 37 zugewandten Seiten Schrägflächen 47. Auch die Umfangswandabschnitte 36 und 37 sind an ihren den Keilkörpern 41 und 42 zugewandten Seite schräg verlaufend, so dass durch eine Linearbewegung der Keilkörper 41 und 42 entsprechend der Pfeile bzw. Zugorgane 43 und 44 die Umfangswandabschnitte 36 und 37 im Sinne eines Aufweitens des Außenumfangs 38 und somit eines Einpressens der Lagerhülse 90 in die Lageröffnung 82 betätigbar sind. Man erkennt, dass die Keilkörper 41 und 42 unterschiedlich bemessen sind, so dass beispielsweise am Umfangswandabschnitt 37 ein größerer Druck ausübbar ist als am vergleichsweise kurzen oder niederen Umfangswandabschnitt 37.

Die Umfangswand 129 weist zweckmäßigerweise Dehnungsschlitze 39 auf, so dass die Umfangswandabschnitte 36 und 37 sowie weitere, nicht bezeichnete Umfangswandabschnitte leicht aufweitbar sind.

## Patentansprüche

1. Einpressvorrichtung (10; 110) zum Einpressen einer Lagerhülse (90) in eine Lageröffnung (82) eines Motorbauteils (M), insbesondere in ein Lagerauge eines Pleuels (80), mit einem Einpressdorn (20; 120) zum Halten und Einpressen der Lagerhülse (90) in die Lageröffnung (82), wobei eine Außenumfangsfläche (25) des Einpressdorns (20; 120) zur Anlage an einer Innenumfangsfläche der Lagerhülse (90) vorgesehen ist, **dadurch gekennzeichnet, dass** die Einpressvorrichtung (10; 110) Verdrängermittel (30; 130) aufweist und mindestens ein einen Teil der Außenumfangsfläche (25) aufweisender Umfangswandabschnitt (36, 37) des Einpressdorns (20; 120) durch die Verdrängermittel (30; 130) im Sinne eines Aufweitens eines Außenumfangs (38) der Außenumfangsfläche (25) des Einpressdorns (20; 120) und somit eines Außenumfangs (94) der Lagerhülse (90) beaufschlagbar ist, um die in die Lageröffnung (82) eingebrachte Lagerhülse (90) aufzuweiten und an eine Innenfläche (87) der Lageröffnung (82) anzupressen.

2. Einpressvorrichtung nach Anspruch 1, **dadurch gekennzeichnet, dass** das Verdrängermittel (30; 130) mindestens eine hinter dem mindestens einen Umfangswandabschnitt (36, 37) angeordnete Fluidkammer (31, 32) aufweist, die bei einer Druckbeaufschlagung mit einem Fluid, insbesondere mit Hydrauliköl, den mindestens einen Umfangswandabschnitt (36, 37) betätigt.

3. Einpressvorrichtung nach Anspruch 1 oder 2, **dadurch gekennzeichnet, dass** das Verdrängermittel (30; 130) ein Keilgetriebe (40) zur Beaufschlagung des mindestens einen Umfangswandabschnitts (36, 37) umfasst.

4. Einpressvorrichtung nach Anspruch 3, **dadurch gekennzeichnet, dass** das Keilgetriebe (40) mindestens einen an einer von der Außenumfangsfläche (25) abgewandten Rückseite beweglich gelagerten Keilkörper (41, 42) und/oder Schraubkörper umfasst, durch dessen jeweilige Bewegung der Umfangswandabschnitt (36, 37) betätigbar ist.

5. Einpressvorrichtung nach einem der vorhergehenden Ansprüche, **dadurch gekennzeichnet, dass** die Außenumfangsfläche (25) mindestens einen Dehnungsschlitz (39) aufweist und/oder mindestens zwei durch mindestens einen Dehnungsschlitz (39) voneinander getrennte Umfangswandabschnitte (36, 37) aufweist.

6. Einpressvorrichtung nach einem der vorhergehenden Ansprüche, **dadurch gekennzeichnet, dass** sie einen Stützkörper (50) zum Abstützen des Einpressdorns (20; 120) während des Einpressens der Lagerhülse (90) aufweist.

7. Einpressvorrichtung nach Anspruch 6, **dadurch gekennzeichnet, dass** der Stützkörper (50) eine Aufnahme für einen Vorderabschnitt des Einpressdorns (20; 120) aufweist.

8. Einpressvorrichtung nach einem der vorhergehenden Ansprüche, **dadurch gekennzeichnet, dass** der Stützkörper (50) und der Einpressdorn (20; 120) relativ zueinander beweglich gelagert sind und/oder dass dem Stützkörper (50) und/oder dem Einpressdorn (20; 120) mindestens ein Antrieb (21, 51) zugeordnet ist.

9. Einpressvorrichtung nach einem der vorhergehenden Ansprüche, **dadurch gekennzeichnet, dass** sie mindestens eine Stützanschlagfläche (28; 58) für eine Stirnseite (92, 93) der Lagerhülse (90) aufweist.

10. Einpressvorrichtung nach Anspruch 9, **dadurch gekennzeichnet, dass** die mindestens eine Stützanschlagfläche (28; 58) oder eine Reihe nebeneinander angeordneter Stützanschlagflächen (28; 58) insgesamt einen bezüglich einer Längserstreckung des Einpressdorns (20; 120) im Bereich der zum Halten der Lagerhülse (90) vorgesehenen Außenumfangsfläche (25) oder einer Einführachse (E) des Einpressdorns (20; 120) in die Lageröffnung (82) des Motorbauteils (M) schrägen, nicht rechtwinkligen und/oder einen gekrümmten Verlauf aufweisen.

11. Einpressvorrichtung nach Anspruch 9 oder 10, **dadurch gekennzeichnet, dass** die mindestens eine Stützanschlagfläche (28; 58) an einer Anschlagschulter oder einem Anschlagvorsprung des Einpressdorns (20; 120) und/oder des Stützkörpers (50) vorgesehen ist.

12. Einpressvorrichtung nach einem der vorhergehenden Ansprüche, **dadurch gekennzeichnet, dass** sie eine Werkstückhalterung (11) zum Halten des Motorbauteils (M) aufweist.

13. Einpressvorrichtung nach Anspruch 12, **dadurch gekennzeichnet, dass** die Werkstückhalterung (11) eine Durchtrittsöffnung (16) aufweist, den der Einpressdorn (20; 120) und/oder der Stützkörper (50) zum Einpressen der Lagerhülse (90) durchdringen.

14. Einpressvorrichtung (10; 110) nach einem der vorhergehenden Ansprüche, **dadurch gekennzeichnet, dass** sie einen Bestandteil eines Bearbeitungszentrums für Motorbauteile (M) bildet, wobei das Bearbeitungszentrum eine Bearbeitungseinrichtung für mindestens einen weiteren Bearbeitungsschritt aufweist, insbesondere eine Kerbeinrichtung zum Einbringen einer Laserkerbe in das Motorbauteil (M) und/oder einer Crackeinrichtung zum Cracken eines Teils des Motorbauteils (M).

15. Verfahren zum Einpressen einer Lagerhülse (90) in eine Lageröffnung (82) eines Motorbauteils (M), insbesondere in ein Lagerauge eines Pleuels (80), mit einer einen Einpressdorn (20; 120) zum Halten und Einpressen der Lagerhülse (90) in die Lageröffnung (82) aufweisenden Einpressvorrichtung (10; 110), wobei eine Außenumfangsfläche (25) des Einpressdorns (20; 120) zur Anlage an einer Innenumfangsfläche der Lagerhülse (90) vorgesehen ist, mit den Schritten:
- Anordnen der Lagerhülse (90) mit ihrer Innenumfangsfläche an der Außenumfangsfläche (25) des Einpressdorns (20; 120),
- Einführen der Lagerhülse (90) in die Lageröffnung (82) des Motorbauteils (M),
- Betätigen eines Verdrängermittels (30; 130) zur Beaufschlagung mindestens eines Umfangswandabschnitts (36, 37), der einen Teil der Außenumfangsfläche (25) aufweist, im Sinne eines Aufweitens eines Außenumfangs (38) der Außenumfangsfläche (25) des Einpressdorns (20; 120) und somit eines Außenumfangs (38) der Lagerhülse (90), um die in die Lageröffnung (82) eingebrachte Lagerhülse (90) aufzuweiten und an eine Innenfläche (87) der Lageröffnung (82) anzupressen.
